# EUROPÄISCHE PATENTSCHRIFT

(11) **EP 1 607 329 B1**
(45) Veröffentlichungstag und Bekanntmachung des Hinweises auf die Patenterteilung: **16.08.2006**
(21) Anmeldenummer: 04014194.7
(22) Anmeldetag: 17.06.2004
(51) Int. Cl.: B64D 9/00, B60P 7/08

(54) **Schnellwechselbeschlag**
Releasable track locking assembly
Dispositif de verrouillage détachable

(43) Veröffentlichungstag der Anmeldung: 21.12.2005
(73) Patentinhaber: Albert Mühlenberg Apparatebau GmbH & Co. KG, 22848 Norderstedt (DE)
(72) Erfinder: Bonsignore, Paolo, 22846 Norderstedt (DE); Wahl, Claudius, 22846 Norderstedt (DE); Reiher, Ronald, 22395 Hamburg (DE)
(74) Vertreter: Strobel, Wolfgang

(56) Entgegenhaltungen:
- DE-C- 4 115 815
- US-A- 4 213 593

## Beschreibung

Die vorliegende Erfindung betrifft einen Schnellwechselbeschlag für im Querschnitt C-förmige, insbesondere in Flugzeugen angebrachte Lochschienen.

Derartige Beschläge werden verwendet in Kombination mit genormten Lochschienen zum Festlegen von Innenausrüstungsteilen, beispielsweise von Sitzen, Wandteilen, sogenannten Dockhouses, etc.

Aus der EP 0 583 295 B1 und DE 4 115 815 C1 ist ein Schnellwechselbeschlag bekannt, der ein Basisteil aufweist, das mit Einrichtungen verbindbar ist, die mit dem Schnellwechselbeschlag lösbar an der Lochschiene gelagert werden sollen. Der dort beschriebene Schnellwechselbeschlag weist eine Halteeinrichtung auf, die zwei Halteschuhe zum lösbaren Eingriff mit der Lochschiene aufweist, die über einen Abstandträger miteinander verbunden sind. Zum Arretieren des Schnellwechselbeschlages wird mit einem Schwenkhebel der Abstandsträger und damit die beiden Halteschuhe beim Verschwenken des Hebels in der Lochschiene verschoben und zwar in Bereiche zwischen den Löchern der Lochschiene, die dann die Halteschuhe überdecken und somit ein Herausbewegen des Schnellwechselbeschlages aus der Lochschiene verhindern sollen.

Ein besonderer Nachteil des Schnellwechselbeschlags der EP 0 583 295 B1 und DE 4 115 815 C1 ist, dass ein eigentliches Festklemmen des Schnellwechselbeschlages nicht sichergestellt werden kann. Aufgrund der vorhandenen Fertigungstoleranzen sowohl der normierten Lochschiene als auch des Abstandsträgers mit den Halteschuhen besteht einerseits die Gefahr, dass noch ein Spiel zwischen Schnellwechselbeschlag und Lochschiene besteht und damit die mit ihm verbundene Einrichtung in der Lochschiene noch spielfrei verankert ist, oder, andererseits, die Halteschuhe nahezu nicht verschoben werden können, weil der Abstand zu gering ist, so dass eine sichere Lagerung der mit dem Schnellwechselbeschlag zu arretierenden Elemente nicht gewährleistet ist.

Aus der DE 195 20 959 C2 ist ein Schnellwechselbeschlag bekannt, bei dem zwei Halteschuhe auf einer Exzenterwelle gelagert sind, an der ein Hebel angreift, der zum Verschwenken der Exzenterwelle dient, und durch sein Verschwenken eine lineare Bewegung der Halteschuhe senkrecht zur Längsrichtung der Lochschiene erzeugt.

In seiner Klemmstellung steht der Klemmhebel im wesentlichen in horizontaler Richtung aus dem Schnellwechselbeschlag hervor, so dass durch unbeabsichtigte Berührung des Hebels ein Lösen des Schnellwechselbeschlages nicht verhindert werden kann.

Der vorliegenden Erfindung liegt deshalb die Aufgabe zugrunde, einen Schnellwechselbeschlag der eingangs genannten Art derart zu verbessern, dass die Nachteile der Schnellwechselbeschläge des Standes der Technik überwunden werden, und ein einfacher, einfach zu bedienender und funktionssicherer Schnellwechselbeschlag geschaffen wird, der ein schnelles und sicheres Festlegen der damit verbundenen Einrichtungen mit einer Lochschiene ermöglicht.

Diese Aufgabe wird durch die Merkmale des Anspruchs 1 gelöst.

Erfindungsgemäß ist der Exzenterhebel schwenkbeweglich zwischen einer Lösestellung und einer Klemmstellung an einem Zapfen gelagert und mit dem Abstandsträger verbunden, wobei beim Schwenken des Exzenterhebels sich die Halteeinrichtung senkrecht zur Längsrichtung der Lochschiene bewegt.

Insbesondere befindet sich der Exzenterhebel in seiner Klemmstellung im wesentlichen in vertikaler Richtung bezogen auf die im wesentlichen in horizontaler Richtung angeordnete Lochschiene, so dass ein unbeabsichtigtes Berühren des Hebels nicht zur Lockerung des Schnellwechselbeschlags führen kann.

Vorteilhafterweise stützt sich der Exzenterhebel auf dem Basisteil ab. Dadurch wird unter Vermeidung einer aufwendigen Konstruktion auf einfachste Weise die Funktion des Exzenterhebels sichergestellt.

Besonders vorteilhaft ist der Exzenterhebel in seiner Klemmstellung in dem Gehäuse aufgenommen, wodurch ein unbeabsichtigtes Berühren des Exzenterhebels und damit ein Bewegen in seine Lösestellung vermieden wird.

Vorteilhafterweise wird die Bewegung des Abstandsträgers mit den zwei Halteschuhen dadurch erreicht, dass der Zapfen in einer Nut des Gehäuses bewegbar ausgebildet ist.

Weiterhin sind an dem Gehäuse vorteilhafterweise zwei sichelförmige Vorsprünge vorgesehen, die zur Lagefestlegung des Schnellwechselbeschlags in der Lochschiene dienen.

Weiterhin ist vorteilhafterweise an dem Zapfen eine Federeinrichtung vorgesehen. Diese dient dazu, eine federnde Klemmwirkung zu erzeugen, was den gesamten Schnellwechselbeschlag für einen sicheren Einsatz, insbesondere in Flugzeugen geeignet macht, da die teilweise erheblichen Belastungen, die aufgrund der auftretenden Flugbedingungen auf die Inneneinrichtungen wirken, durch die Federeinrichtungen abgefedert werden und eine plastische Verformung und gegebenenfalls sogar Zerstörung der Halteschuhe vermieden wird.

Vorteilhafterweise weist der Schwenkhebel weiterhin eine Arretiereinrichtung auf, mit der er gegen unbeabsichtigtes Lösen aus seiner Klemmstellung in die Lösestellung gehindert wird.

Vorteilhafterweise ist der Schwenkhebel gabelförmig ausgebildet, mit zwei Schenkeln, die schwenkbeweglich auf einer Achse gelagert sind, wobei in der Klemmstellung der Zapfen und die Federeinrichtung sich zwischen den beiden Schenkeln befindet.

Weiterhin ist der Schwenkhebel vorteilhafterweise aus zwei Halbelementen ausgebildet, die miteinander verbunden sind. Die Verbindung kann beispielsweise durch Nieten oder Schweißen erfolgen.

Weitere Einzelheiten, Merkmale und Vorteile der vorliegenden Erfindung ergeben sich aus der nachfolgenden Beschreibung unter Bezugnahme auf die Zeichnungen. Darin zeigt:
- Fig. 1: eine Frontansicht auf den erfindungsgemäßen Schnellwechselbeschlag in seiner Klemmstellung;
- Fig. 2: eine Schnittansicht entlang der Linie A-A von Fig. 1;
- Fig. 3: eine ähnliche Ansicht auf den Schnellwechselbeschlag wie Fig. 2, jedoch in Löse- und Entriegelungsstellung;
- Fig. 4: eine Schnittansicht entlang der Linie IV-IV von Fig. 3;
- Fig. 5: eine Draufsicht auf die Lochschiene und die zwei Halteschuhe mit Abstandsträger und Gewindezapfen in Entriegelungsstellung;
- Fig. 6: eine Schnittansicht entlang der Linie VI-VI von Fig. 2;
- Fig. 7.: eine Draufsicht auf die Lochschiene ähnlich zu jener von Fig. 5, jedoch mit der Halteeinrichtung in Verriegelungsstellung;
- Fig. 8: die x- und y-Koordinatenrichtungen, die im wesentlichen in einer horizontalen Ebene liegen;
- Fig. 9: eine Ansicht auf das Gehäuse mit Basisteil von unten;
- Fig. 10: eine Frontansicht des Gehäuses mit Basisteil des Schnellwechselbeschlags;
- Fig. 11: eine Schnittansicht entlang der Linie A-A von Fig. 10;
- Fig. 12: eine Schnittansicht entlang der Linie B-B von Fig. 10;
- Fig. 13: eine Frontansicht auf einen Halteschuh und Gewindezapfen;
- Fig. 14: eine Seitenansicht auf die beiden Halteschuhe mit Abstandsträger und Gewindezapfen;
- Fig. 15: eine Ansicht von oben auf die Halteeinrichtungselemente von Fig. 14;
- Fig. 16: in vergrößertem Maßstab den Exzenterhebel mit Arretierzapfen in Seitenansicht;
- Fig. 17: eine Rückansicht des Exzenterhebels von Fig. 16;
- Fig. 18: eine Ansicht von oben auf den Exzenterhebel;
- Fig. 19: in vergrößertem Maßstab einen Lagerblock des Exzenterhebels von der Seite;
- Fig. 20: eine Ansicht von oben auf den Lagerblock von Fig. 19, wobei er sich in der Stellung gemäß Fig. 17 befindet;
- Fig. 21: eine Ansicht auf den Lagerblock von Fig. 19 von links;
- Fig. 22: eine Ansicht auf den rechten Teil des gabelförmigen Exzenterhebels;
- Fig. 23: eine Ansicht auf den Exzenterhebelteil von Fig. 22 von links;
- Fig. 24: eine Seitenansicht auf den Exzenterhebelteil von Fig. 22;
- Fig. 25: eine Ansicht auf den linken Teil des gabelförmigen Exzenterhebels;
- Fig. 26: eine Ansicht des Exzenterhebelteiles von Fig. 25 von links;
- Fig. 27: eine Seitenansicht auf den linken Teil des Exzenterhebels;
- Fig. 28: eine Schnittdarstellung auf den erfindungsgemäßen Schnellwechsel beschlag in Löse- und Entriegelungsstellung ähnlich wie jener zu Fig. 3, jedoch zusätzlich mit einer Gehäuseverschlußkappe;
- Fig. 29: eine ähnliche Schnittansicht wie Fig. 28, jedoch mit der Halteeinrichtung in Verriegelungsstellung und dem Exzenterhebel in Lösestellung;
- Fig. 30: den Schnellwechselbeschlag in Klemmstellung analog zur Ansicht von Fig. 2, jedoch mit geschlossenem Gehäuse;
- Fig. 31: die Koordinaten x und z der Darstellungen der vorangegangenen Figuren.

Nachfolgend wird der erfindungsgemäße Schnellwechselbeschlag unter Bezugnahme auf die Figuren näher beschrieben. Dabei sind gleiche Elemente mit den gleichen Bezugsziffern bezeichnet.

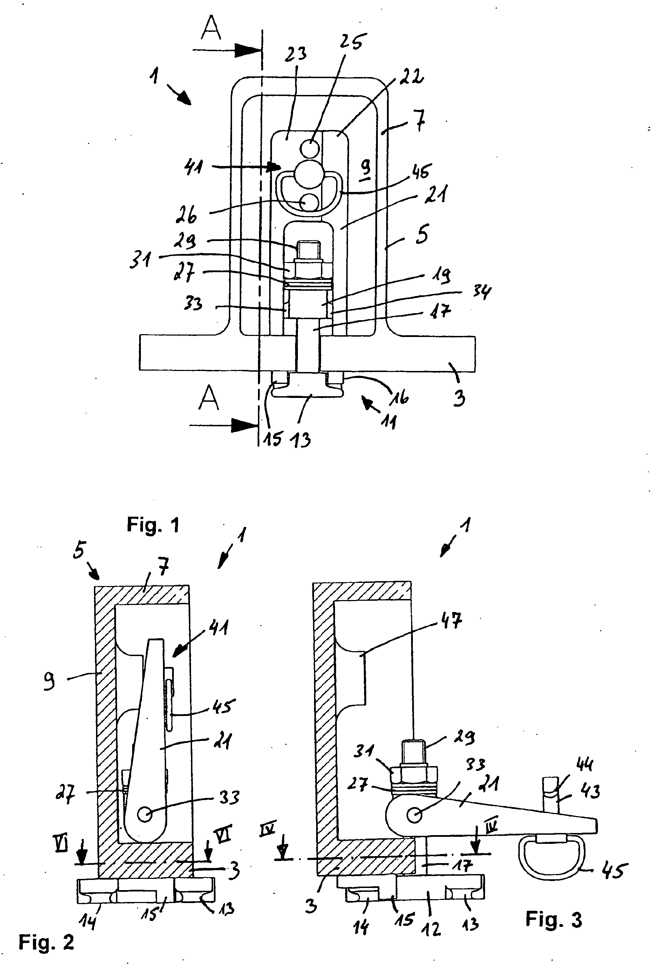

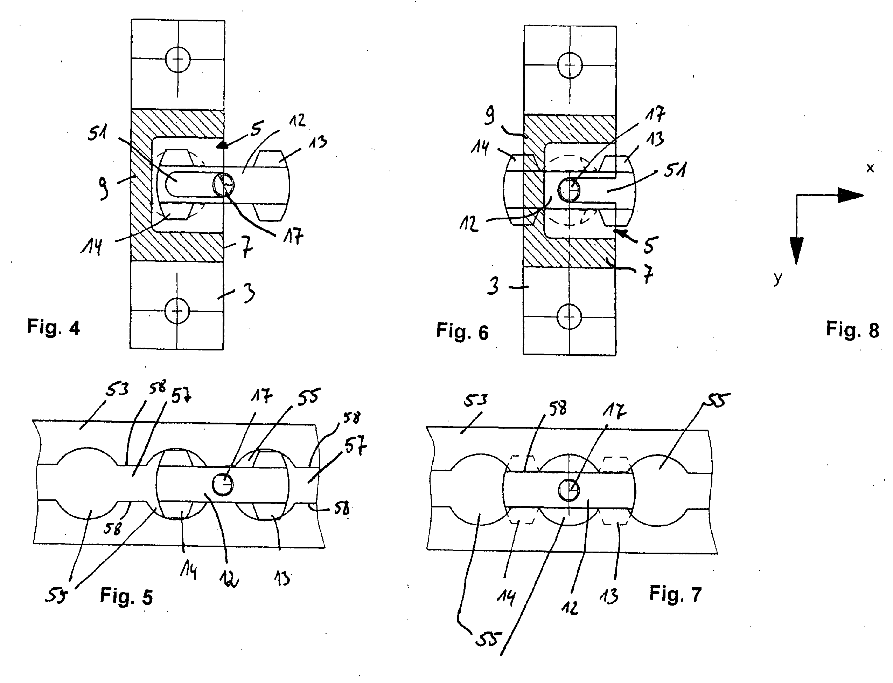

In Fig. 1 ist ein erfindungsgemäßer Schnellwechselbeschlag 1 in Frontansicht dargestellt. Er befindet sich in dieser Darstellung in seiner Klemmstellung. Der Schnellwechselbeschlag 1 weist ein Basisteil 3 auf, das mit Einrichtungen verbindbar ist, die mit dem Schnellwechselbeschlag 1 lösbar an einer Lochschiene (später genauer beschrieben unter Bezugnahme auf Fig. 5 und 7) gelagert werden sollen. Die Einrichtungen, beispielsweise Flugzeugsitze, Paneels und Wände aller Art, etc. sind nicht dargestellt.

Das Basisteil 3 ist in Form eines rechteckförmigen länglichen massiven Blockes ausgebildet, der mit einem Gehäuse 5 vorzugsweise einstückig verbunden ist. Das Gehäuse 5 weist eine bügelförmige Seitenumrahmung 7 und eine Seitenwand 9 auf, wie das besonders deutlich aus den Fig. 2 und 3 hervorgeht.

Der Schnellwechselbeschlag 1 weist eine Halteeinrichtung 11 auf, die zwei Halteschuhe 13, 14 aufweist, deren Ausbildung und Funktionsweise insbesondere unter Bezugnahme auf die Fig. 4 bis 7 beschrieben wird.

Die Halteschuhe 13, 14 sind über einen Abstandsträger 12 miteinander verbunden.

An dem Abstandsträger 12 greift ein Zapfen 17 an, der sich senkrecht nach oben erstreckt. Der Zapfen 17 durchquert einen Lagerblock 19, der zum drehbeweglichen Lagern eines Exzenterhebels 21 dient. Der Exzenterhebel 21 ist, wie aus Fig. 1 ersichtlich, gabelförmig ausgebildet und besteht aus zwei Teilelementen 22 und 23. Diese sind miteinander verbunden, im Ausführungsbeispiel durch Nieten 25 und 26.

Die Sicherung des Zapfens 17 am Lagerblock 19 geschieht durch eine Mutter 31, die auf ein Gewinde 29 am Zapfen aufgeschraubt ist. Vorteilhafterweise sind zur elastischen Lagerung eine Federeinrichtung 27, die zwischen dem Lagerblock 19 und der Mutter 31 angeordnet ist. Die Federeinrichtung 27 kann als Federpaket aus mehreren Tellerfedern ausgebildet sein.

Wie aus den Fig. 1 bis 3 ersichtlich, ist weiterhin eine Arretiereinrichtung 41 des Exzenterhebels 21 im Gehäuse 5 vorgesehen. Ein drehbarer Stift 43 mit Kerben 44 kann durch Drehen eines Bügels 45 in Eingriff gebracht werden mit entsprechenden Zapfen, die in einer Haltebuchse 47 vorgesehen sind. Die Haltebuchse 47 ist mit der Seitenwand 9 des Gehäuses 5 verbunden.

In Fig. 2 ist der Schnellwechselbeschlag 1 von Fig. 1 in Schnittdarstellung gemäß der Linie A-A von Fig. 1 dargestellt. Wie ersichtlich, befindet sich der Schnellwechselbeschlag 1 in seiner Klemmstellung. Der Exzenterhebel 21 ist im Gehäuse 5 mittels Arretiereinrichtung 41 arretiert.

Der erfindungsgemäße Schnellwechselbeschlag 1 nimmt im wesentlichen drei Stellungen ein. In den Fig. 1 und 2 befindet er sich in seiner Klemmstellung. Der Exzenterhebel 21 ist dabei nach oben in seine Klemmstellung geschwenkt und die Halteeinrichtung 11 befindet sich in ihrer Verriegelungsstellung.

Wenn der Exzenterhebel 21 aus seiner Klemmstellung in seine Lösestellung verschenkt wird, befindet sich die Halteeinrichtung 11 zunächst noch in ihrer Verriegelungsstellung, d. h. daß der Schnellwechselbeschlag 1 noch nicht aus der Lochschiene herausgehoben werden kann.

In Fig. 3 ist die Löse- und Entriegelungsstellung des erfindungsgemäßen Schnellwechselbeschlags 1 dargestellt. Die Arretiereinrichtung 41 ist gelockert und der Exzenterhebel 21 ist in seine Lösestellung verschwenkt worden. Darüber hinaus ist der Zapfen zusammen mit dem Exzenterhebel 21 und damit auch die gesamte Halteeinrichtung 11 gegenüber dem Basisteil 3 verschoben worden. Die Halteeinrichtung 11 kommt somit von der Lochschiene frei und der Schnellwechselbeschlag 1 kann herausgehoben werden bzw. in die Schiene eingesetzt werden.

Die Funktionsweise des Lösens und Klemmens bzw. des Verriegelns und Entriegelns des Schnellwechselbeschlags 1 wird nunmehr genauer unter Bezugnahme auf die Fig. 4 bis 7 beschrieben. Fig. 8 zeigt zudem das Koordinatensystem x y der Darstellungen.

In Fig. 4 ist eine Schnittansicht entlang der Linie IV-IV von Fig. 3 dargestellt. Insbesondere wird hieraus die Form und Anordnung der Halteschuhe 13 und 14 und des Abstandsträgers 12 deutlich. Weiterhin ist ersichtlich, dass in dem Basisteil 3 eine Nut 51 eingebracht ist, die zu einer Seite des Basisteils 3 hin offen ist. In der Nut 51 kann der Zapfen 17 von einer Entriegelungsstellung des Schnellwechselbeschlags in eine Verriegelungsstellung verschoben werden, wie das in den Fig. 4 bis 6 dargestellt ist.

Bezugnehmend auf die Fig. 5 und 7 ist dort die Stellung der Halteschuhe 13 und 14 in einer Lochschiene 53 dargestellt. Die Lochschiene 53 ist genormt und weist Löcher 55 auf, die eine vorbestimmte Größe und einen vorbestimmten Abstand voneinander aufweisen. Zwischen zwei Löchern 55 sind verjüngte Öffnungsnuten 57 vorgesehen, mit Haltelippen 58. In Fig. 5 sind die Halteschuhe 13 und 14 innerhalb der Löcher 55 angeordnet so dass der Schnellwechselbeschlag 1 in dieser Stellung aus der Lochschiene 53 herausgenommen werden kann bzw. in diese eingesetzt werden kann. Er befindet sich somit in seiner Entriegelungsstellung.

In Fig. 7 ist die Verriegelungsstellung dargestellt, in der die Halteschuhe 13 und 14 unter die Lippen 58 der Nuten 57 zu liegen kommen. In dieser Stellung kann der Schnellwechselbeschlag 1 durch Schwenken des Exzenterhebles 21 geklemmt werden.

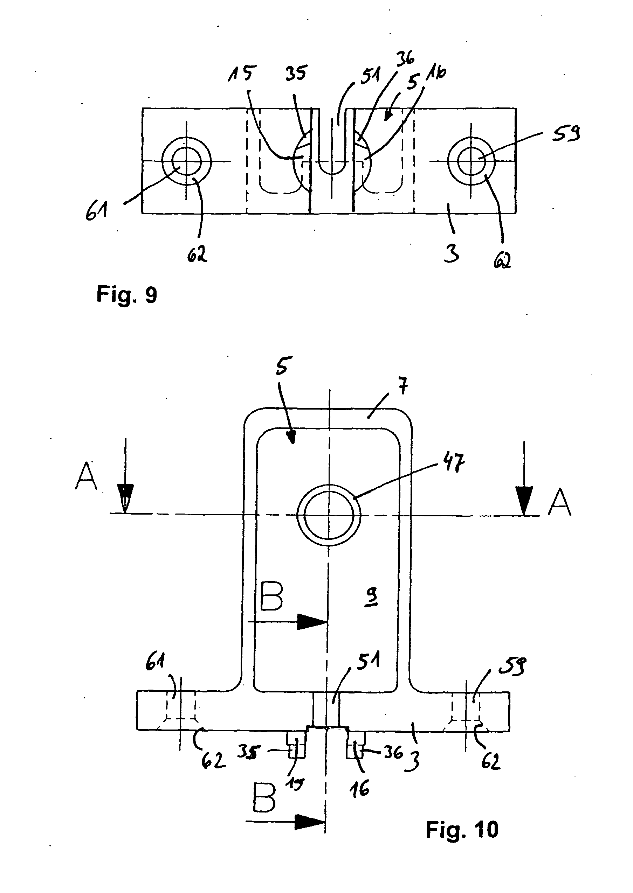

In Fig. 9 ist eine Ansicht von unten auf das Basisteil 3 mit Gehäuse 5 dargestellt. Links und rechts neben dem Gehäuse 5 sind in dem Basisteil zwei Bohrungen 59 und 61 mit angefasten Randabschnitten 62 vorgesehen, die beispielsweise zur Aufnahme von Senkkopfschrauben dienen, mit denen Einrichtungen verbindbar sind, die mittels des Schnellwechselbeschlags 1 lösbar festgelegt werden sollen.

In Fig. 10 ist die Frontansicht des Basisteils 3 mit Gehäuse 5 dargestellt. Zur Positionierung des Basisteils 3 mit Gehäuse 5 gegenüber der Lochschiene sind sichelförmige Positionsvorsprünge 15 und 16 vorgesehen, deren Außenkontur der Kontur eines Loches 55 der Lochschiene 53 angepasst ist. Die sichelförmigen Positionsvorsprünge 15, 16 weisen ihrerseits Anschlagvorsprünge 35, 36 auf, die dazu dienen, einen Anschlag gegen den Halteschuh 14 zu bilden, wenn die Halteschuhe 13 und 14 zusammen mit dem Zapfen 17 in der Nut 51 nach außen verschoben werden. Damit wird verhindert, dass der Zapfen 17 vollständig aus der Nut 51 herausgleitet und wird andererseits eine definierte Entriegelungsstellung der Halteschuhe 13 und 14 in der Lochschiene erreicht.

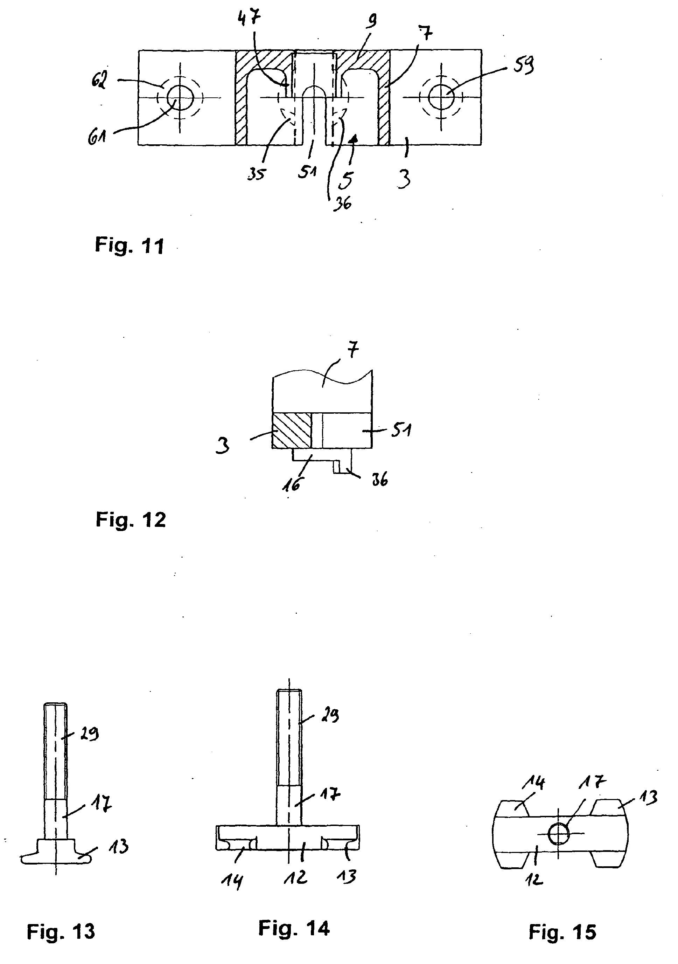

In Fig. 11 ist eine Schnittdarstellung entlang der Linie A-A von Fig. 10 dargestellt. Insbesondere ergibt sich hieraus die einstückige Ausbildung der Haltebuchse 47 mit der Seitenwand 9 des Gehäuses 5.

In Fig. 12 ist die Schnittdarstellung entlang der Linie B-B von Fig. 10 dargestellt. Insbesondere lässt sich hier die Ausbildung des sichelförmigen Positionsvorsprungs 16 mit Anschlagvorsprung 36 erkennen.

In den Fig. 13 bis 15 sind die Halteschuhe 13, 14 mit Abstandsträger 12 und daran angebrachten Gewindezapfen 17 in Frontansicht, Seitenansicht und Draufsicht dargestellt. Wie ersichtlich, sind diese Elemente einstückig miteinander verbunden.

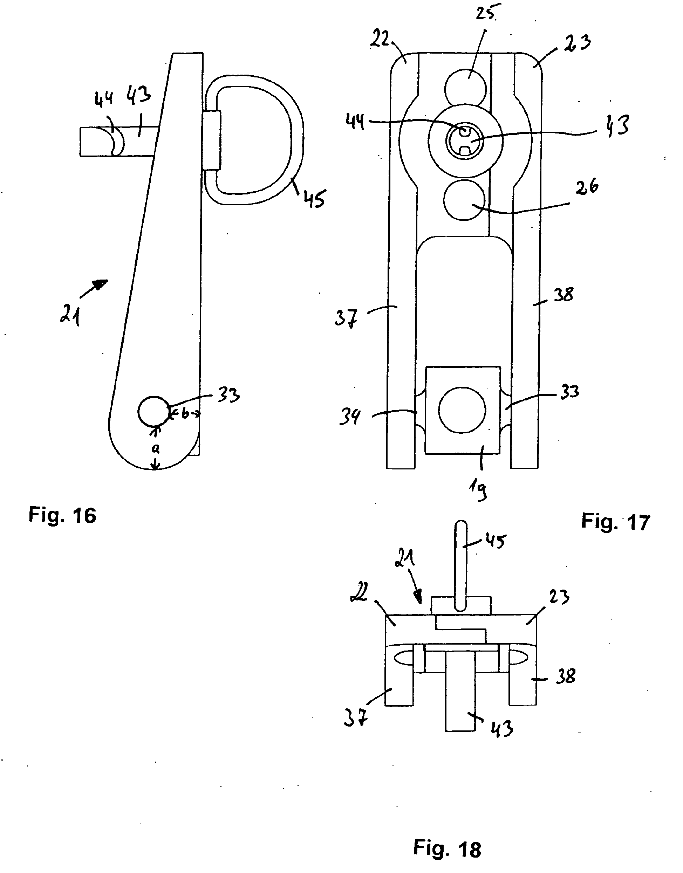

In den Fig. 16 bis 18 ist der Exzenterhebel 21 in gegenüber den bisherigen Figuren vergrößertem Maßstab dargestellt. Fig. 16 zeigt den Exzenterhebel 21 in Seitenansicht mit dem drehbaren Stift 43. Insbesondere wird in dieser Ansicht die exzentrische Wirkung des Exzenterhebels beim Verschwenken deutlich, da die Länge a deutlich größer ist als die Länge b. Dies bedeutet, dass beim Verschwenken des Exzenterhebels 21 aus der Lösestellung, beispielsweise dargestellt in Fig. 3, in die Klemmstellung, beispielsweise dargestellt in Fig. 1, dazu führt, dass der Lagerblock 19 mit angehoben wird, wodurch auch der Zapfen 17 mit Abstandsträger 12 und Halteschuhen 13 und 14 nach oben angehoben wird. Dadurch wird eine sichere Klemmstellung der Halteschuhe 13, 14 gegenüber bzw. in der Lochschiene erzeugt.

Wie aus Fig. 17 noch deutlicher ersichtlich, ist der Exzenterhebel 21 aus zwei Teilen 22 und 23 gebildet, wobei er gabelförmig mit Schenkeln 37 und 38 ausgebildet ist, zwischen die der Lagerblock 19 Platz findet, wobei die Schenkel 37 und 38 um die Lagerzapfen 33 und 34 drehbar sind.

In der Draufsicht von Fig. 18 sieht man besonders deutlich die Zweigeteiltheit des Exzenterhebels 21 aus den beiden Teilelementen 22 und 23.

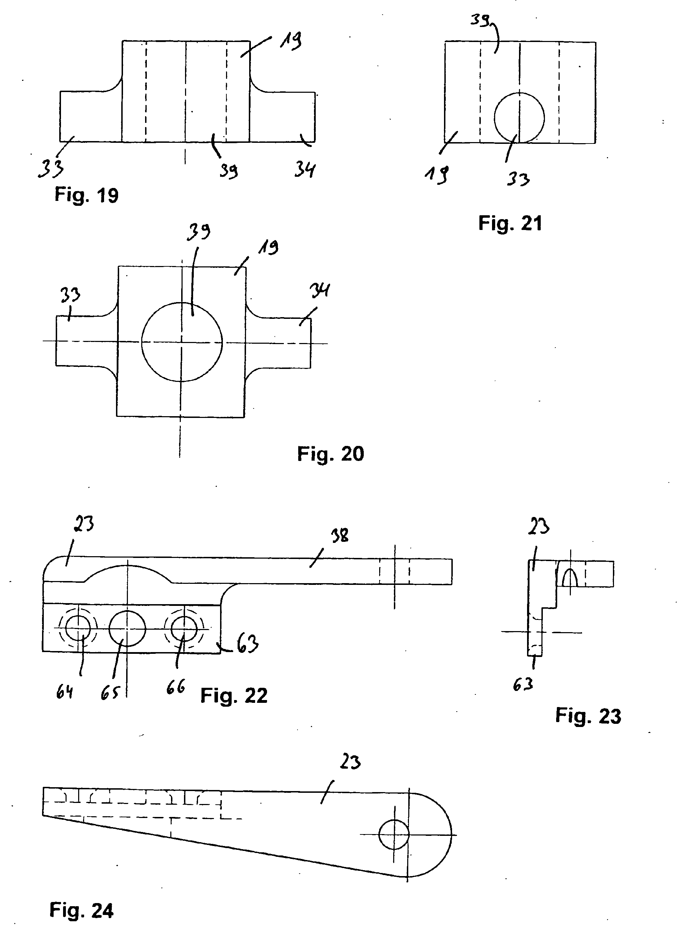

In den Fig. 19 bis 21 ist der Lagerblock 19 in drei verschiedenen Ansichten dargestellt. Die Durchgangsbohrung 39 dient zur Aufnahme des Zapfens 17.

In den Fig. 22 bis 24 ist das Teilelement 23 des Exzenterhebels in drei Ansichten dargestellt. Es weist einen Steg 63 mit drei Durchgangsbohrungen 64, 65, 66 auf, wobei die Durchgangsbohrung 65 zur Aufnahme des drehbaren Stifts 43 dient und die Durchgangsbohrungen 64 und 66 zur Aufnahme der Niete 25 und 26 dienen.

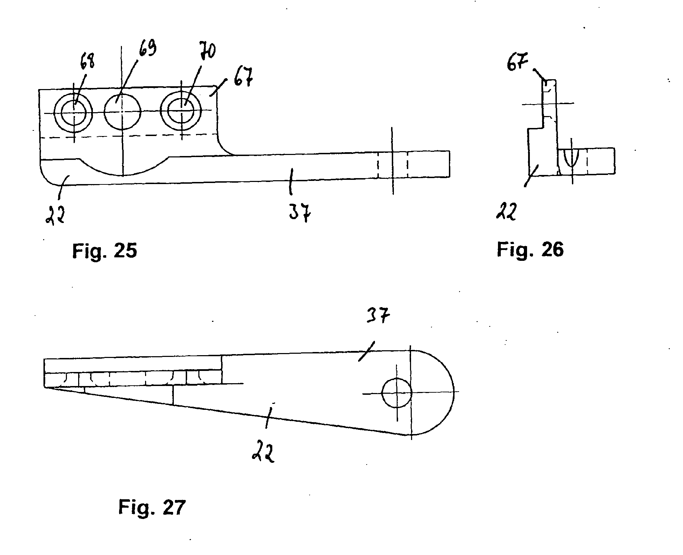

In den Fig. 25 bis 27 ist in drei Ansichten das zweite Teilelement 22 des Exzenterhebels 21 dargestellt, das ebenfalls einen Steg 67 und drei Durchgangsbohrungen 68, 69 und 70 aufweist. Die mittlere Durchgangsbohrung 69 dient wiederum dem Durchtritt des drehbaren Stifts 43, wo hingegen die seitlichen Bohrungen 68 und 70 zur Aufnahme der Niete 25, 26 dienen.

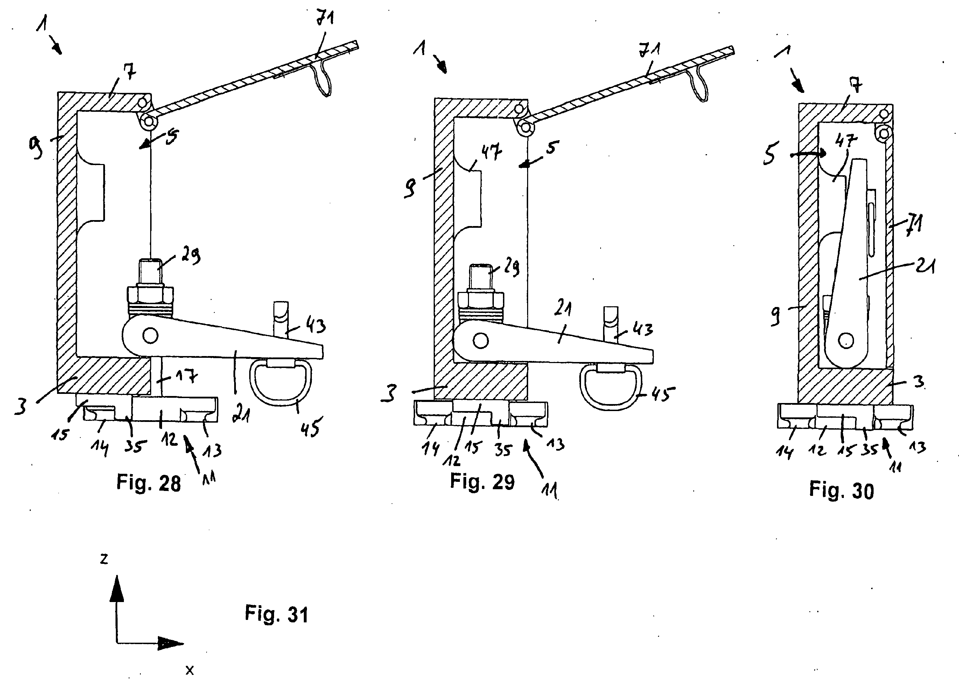

In den Fig. 28 bis 30 ist eine erweiterte Ausführungsform des erfindungsgemäßen Schnellwechselbeschlages in Schnittansicht dargestellt. Die Fig. 31 zeigt die Koordinaten x und z des kartesischen Koordinatensystems. Zusätzlich zur bisherigen Ausführungsform weist der Schnellwechselbeschlag einen Gehäusedeckel 71 auf, der es ermöglicht, den Gehäuseinnenraum vollständig zu kapseln, um ihn beispielsweise vor Verschmutzung zu schützen.

In Fig. 28 befindet sich der Schnellwechselbeschlag 1 in seiner Löse- und Entriegelungsstellung, also in seiner Einsetz- oder Herausnehmposition aus der Lochschiene.

In Fig. 29 ist die Halteeinrichtung 11 in die Verriegelungsstellung verschoben, das heißt dass der Zapfen 17 zusammen mit dem Abstandsträger 12 und den Halteschuhen 13 und 14 gegenüber dem Basisteil 3 bzw. der sichelförmigen Positionsvorsprünge 15 und 16 verschoben wurde. Ein Bewegung des Schnellwechselbeschlags in z-Richtung ist praktisch nicht mehr möglich bzw. nur noch im Umfang des Abstandes zwischen Oberseite der Halteschuhe 13, 14 und Unterseite der Haltelippen 58.

In Fig. 30 ist der Exzenterhebel 21 in seine Klemmposition hochgeschwenkt und arretiert. Der Gehäusedeckel 21 ist geschlossen.

Der erfindungsgemäße Schnellewecheselbeschlag kann beispielsweise aus Metall, insbesondere aus Aluminium gebildet sein.

Mit Hilfe des erfindungsgemäßen Schnellwechselbeschlags kann ein schnelles und sicheres Klemmen von Einrichtungen in Lochschienen ausgeführt werden, wobei durch die vorgesehenen Anschlageinrichtungen auch eine sichere Handhabung ermöglicht wird.

## Patentansprüche

1. Schnellwechselbeschlag (1) für im Querschnitt C-förmige, insbesondere in Flugzeugen angebrachte Lochschienen (53), mit einem Basisteil (3), das mit Einrichtungen verbindbar ist, die mit dem Schnellwechselbeschlag lösbar an der Lochschiene gelagert werden sollen, mit einer Halteeinrichtung (11) die zwei Halteschuhe (13, 14) zum lösbaren Eingriff mit der Lochschiene (53) aufweist, die über einen Abstandsträger (12) miteinander verbunden sind, und mit einer Positionseinrichtung (15, 16) die zur Positionierung des Schnellwechselbeschlags (1) bei dessen Einsetzen in die Lochschiene dient, wobei die Halteeinrichtung mit einem Exzenterhebel (21) zusammenwirkt, **dadurch gekennzeichnet, dass** der Exzenterhebel (21) schwenkbeweglich zwischen einer Lösestellung und einer Klemmstellung an einem Zapfen (17) gelagert ist, der mit dem Abstandsträger (12) verbunden ist, und dassbeim Schwenken des Exzenterhebels (21) sich die Halteeinrichtung (11) senkrecht zur Längsrichtung der Lochschiene bewegt.

2. Schnellwechselbeschlag nach Anspruch 1, **dadurch gekennzeichnet, dass** der Exzenterhebel (21) sich auf dem Basisteil (3) abstützt.

3. Schnellwechselbeschlag nach Anspruch 2, **dadurch gekennzeichnet, dass** der Exzenterhebel (21) in seiner Klemmstellung in einem Gehäuse (5) aufgenommen ist.

4. Schnellwechselbeschlag nach Anspruch 3, **dadurch gekennzeichnet, dass** der Zapfen (17) in einer Nut (51) des Gehäuses (5) bewegbar ist.

5. Schnellwechselbeschlag nach einem der Ansprüche 1 bis 4, **dadurch gekennzeichnet, dass** die Positionseinrichtung (15, 16) an dem Basisteil (3) vorgesehen ist und zwei sichelförmige Vorsprünge (15, 16) aufweist, die zur Lagefestlegung des Schnellwechselbeschlags dienen.

6. Schnellwechselbeschlag nach einem der Ansprüche 1 bis 5, **dadurch gekennzeichnet, dass** an dem Zapfen (17) eine Federeinrichtung (27) vorgesehen ist.

7. Schnellwechselbeschlag nach einem der Ansprüche 1 bis 6, **dadurch gekennzeichnet, dass** der Exzenterhebel (21) eine Arretiereinrichtung (41) aufweist.

8. Schnellwechselbeschlag nach einem der Ansprüche 1 bis 7, **dadurch gekennzeichnet, dass** der Exzenterhebel (21) gabelförmig (37, 38) ausgebildet ist.

9. Schnellwechselbeschlag nach einem der Ansprüche 1 bis 8, **dadurch gekennzeichnet, dass** der Exzenterhebel (21) aus zwei Teilelementen (22, 23) ausgebildet ist, die miteinander verbunden sind.

10. Schnellwechselbeschlag nach einem der Ansprüche 3 bis 9, **dadurch gekennzeichnet, dass** das Gehäuse (5) einen Gehäusedeckel (71) zur vollständigen Kapselung des Exzenterhebels (21) in dem Gehäuse (5) aufweist.

## Claims

1. Quick mounting and release fixture (1) for perforated rails (53) having a C-shaped cross section, being particularly arranged in airplanes, comprising a base member (3) which can be connected to means hat shall be supported releasably with the quick mounting and release fixture on the perforated rail, comprising a holding means (11) having two holding shoes (13, 14) for the releasable engagement with the perforated rail (53), connected to one another through a spacer (12), and comprising a position means (15, 16), which serves for positioning the quick mounting and release fixture (1) when same is inserted into the perforated rail, wherein the holding means cooperates with an eccentric lever (21), **characterized in that** the eccentric lever (21) is supported in a pivotally movable manner between a release position and a clamping position on a pin (17) that is connected to the spacer (12), and **in that** when pivoting the eccentric lever (219 the holding means (11) moves perpendicularly with respect to the longitudinal direction of the perforated rail.

2. Quick mounting and release fixture as claimed in claim 1, **characterized in that** the eccentric lever (21) is supported on the base member (3).

3. Quick mounting and release fixture as claimed in claim 2, **characterized in that** the eccentric lever (21) is accommodated in its clamping position in a housing (5).

4. Quick mounting and release fixture as claimed in claim 3, **characterized in that** the pin (17) is movable in a groove (51) of the housing.

5. Quick mounting and release fixture as claimed in one of claims 1 to 4, character-ized in that the position means (15, 16) is provided on the base member (3) and comprises two sickle-shaped projections (15, 16) which serve for defining the position of the quick mounting and release fixture.

6. Quick mounting and release fixture as claimed in one of claims 1 to 5, **characterized in that** a spring means (27) is provided on the pin (17).

7. Quick mounting and release fixture as claimed in one of claims 1 to 6, **characterized in that** the eccentric lever (21) has a fastening means (41).

8. Quick mounting and release fixture as claimed in one of claims 1 to 7, character-ized in that the eccentric lever (21) is fork-shaped (37, 38).

9. Quick mounting and release fixture as claimed in one of claims 1 to 8, **characterized in that** the eccentric lever (21) is formed of two partial elements (22, 23) that are connected to one another.

10. Quick mounting and release fixture as claimed in one of claims 3 to 9, **characterized in that** the housing (5) comprises a housing cover (71) for fully encapsulating the eccentric lever (21) in the housing (5).

## Revendications

1. Garniture à serrage rapide (1) pour des rails perforés (53) de section transversale en C, montés en particulier dans des avions, comprenant une partie de base (3) qui peut être assemblée avec des dispositifs devant être montés de façon amovible avec la garniture sur le rail perforé, un dispositif d'arrêt (11) qui comporte deux sabots d'arrêt (13, 14) pour la prise amovible avec le rail perforé (53), assemblés entre eux par l'intermédiaire d'un support d'écartement (12), et un dispositif de positionnement (15, 16), qui sert à positionner la Garniture à serrage rapide (1) lors de sa mise en place dans le rail perforé, le dispositif d'arrêt coopérant avec un levier à excentrique (21), **caractérisée en ce que** le levier à excentrique (21) est monté mobile en rotation entre une position de desserrage et une position de blocage sur un tourillon (17), assemblé avec le support d'écartement (12), et que le dispositif d'arrêt (11) se déplace perpendiculairement à la direction longitudinale du rail perforé lors de la rotation du levier à excentrique (21).

2. Garniture à serrage rapide suivant la revendication 1, **caractérisée en ce que** le levier à excentrique (21) s'appuie sur la partie de base (3).

3. Garniture à serrage rapide suivant la revendication 2, **caractérisée en ce que** le levier à excentrique (21) est logé dans sa position de blocage dans un carter (5).

4. Garniture à serrage rapide suivant la revendication 3, **caractérisée en ce que** le tourillon (17) peut se déplacer dans une gorge (51) du carter (5).

5. Garniture à serrage rapide suivant l'une des revendications 1 à 4, **caractérisée en ce que** le dispositif de positionnement (15, 16) est prévu sur la partie de base (3) et présente deux saillies (15, 16) en forme de croissant, qui servent à fixer la position de la garniture à serrage rapide.

6. Garniture à serrage rapide suivant l'une des revendications 1 à 5, **caractérisée en ce qu'**un dispositif à ressorts (27) est prévu sur le tourillon (17).

7. Garniture à serrage rapide suivant l'une des revendications 1 à 6, **caractérisée en ce que** le levier à excentrique (21) présente un dispositif d'arrêt (41).

8. Garniture à serrage rapide suivant l'une des revendications 1 à 7, **caractérisée en ce que** le levier à excentrique (21) est configuré en forme de fourche (37, 38).

9. Garniture à serrage rapide suivant l'une des revendications 1 à 8, **caractérisée en ce que** le levier à excentrique (21) est constitué de deux éléments partiels (22, 23) assemblés entre eux.

10. Garniture à serrage rapide suivant l'une des revendications 3 à 9, **caractérisée en ce que** le carter (5) présente un couvercle (71) pour le blindage complet du levier à excentrique (21) dans le carter (5).
